# EUROPÄISCHE PATENTSCHRIFT

(11) **EP 3 957 788 B1**
(45) Veröffentlichungstag und Bekanntmachung des Hinweises auf die Patenterteilung: **03.07.2024**
(21) Anmeldenummer: 20192026.1
(22) Anmeldetag: 20.08.2020
(51) Int. Cl.: D04B 27/34, F16F 7/10, F16C 13/00

(54) **KETTENWIRKMASCHINE**
WARP KNITTING LOOM
MÉTIER À TRICOTER À CHAÎNE

(43) Veröffentlichungstag der Anmeldung: 23.02.2022
(73) Patentinhaber: KARL MAYER STOLL R&D GmbH, 63179 Obertshausen (DE)
(72) Erfinder: Dziedzioch, Damian, 63179 Obertshausen (DE); Kollek, Klaus, 65239 Hochheim (DE)
(74) Vertreter: Keil & Schaafhausen Patentanwälte PartGmbB

(56) Entgegenhaltungen:
- EP-A1- 1 411 254
- EP-A1- 1 731 669
- EP-A2- 1 936 214
- DE-A1-102004 000 038
- DE-A1-102007 031 090
- DE-A1-102010 046 587

## Beschreibung

Die vorliegende Erfindung betrifft eine Kettenwirkmaschine mit einem Wirkbereich und einem Warenabzug, der mindestens eine Walze aufweist.

Eine derartige Kettenwirkmaschine ist aus DE 10 2010 046 587 A1 bekannt. Hier ist ein Warenabzug mit mindestens einer Abzugswalze vorgesehen, die schwingungsmäßig von dem Wirkbereich entkoppelt ist. Hierzu sind zwischen dem Wirkbereich und dem Warenabzug an jedem Ende des Warenabzugs mindestens zwei Schwingungsdämpferelemente angeordnet.

DE 10 2004 000 038 A1 zeigt ein schwingungsgemindertes Maschinenelement in Form einer Walze, bei der ein in der Walze ausgebildeter Hohlraum mit einem dämpfenden Füllstoff ausgegossen ist. Der Füllstoff kann als Mineralgussmasse ausgebildet sein.

EP 1 411 254 A1 beschreibt eine Mittelwalze eines Kalanders mit einer Tilgeranordnung. Der Walzenmantel ist über eine Scheibe aus einem elastischen Material mit einem hantelförmigen Massenelement verbunden. Die Scheibe bildet in sich die Feder- und Dämpfungseigenschaften aus.

EP 1 936 214 A2 zeigt eine Walze mit Schwingungsdämpfer. Die Walze weist einen den Walzenmantel durchsetzenden Träger auf, dessen Schwingungen durch den Schwingungsdämpfer gedämpft werden sollen.

EP 1 731 669 A1 beschreibt eine Biegeausgleichswalze mit einem umlaufenden Walzenmantel, der einen Hohlraum aufweist, in dem ein Joch angeordnet ist. Zwischen dem Joch und dem Walzenmantel ist eine hydraulische Stützquelle angeordnet. Der Druck der Stützwelle kann so geregelt werden, dass eine dämpfende dynamische Kraft erzeugt wird.

DE 10 2007 031 090 A1 zeigt eine Schwingungssteuerung in einem Papierkalander. Eine Kalanderwalze ist mit einem Schwingungsdämpfer versehen, der zwei hutförmige Massen aufweist, die über eine Abstandsrohrmasse miteinander verbunden sind. Zwei viskoelastische Ringe sind zwischen der Abstandsrohrmasse und den beiden hutförmigen Massen angeordnet. Durch eine Änderung des Abstands zwischen den beiden hutförmigen Massen wird eine auf die viskoelastischen Elemente aufgebrachte Druckspannung verändert und damit auch die Dämpfungseigenschaften.

Eine Kettenwirkmaschine dient zur Erzeugung von Wirkwaren. Bei der Erzeugung einer Wirkware erfolgt im Wirkbereich ein Maschenbildungsvorgang, bei dem parallel zulaufende Fäden einer Kette durch Bildung von Maschen miteinander verbunden werden. Das so entstandene Flächengebilde wird über den Warenabzug abgezogen. Der Warenabzug weist hierbei mindestens eine, jedoch in der Regel mehrere Walzen auf, über die die Wirkware geführt wird. Durch eine Änderung der Spannung, mit der der Warenabzug die Wirkware abzieht, kann auch das Erscheinungsbild der Wirkware verändert werden.

Bei Kettenwirkmaschinen geht die Entwicklung einerseits zu einer immer höheren Arbeitsgeschwindigkeit. Die Arbeitsgeschwindigkeit wird auch mit "Nenndrehzahl" bezeichnet. Andererseits geht die Entwicklung zu immer größeren Arbeitsbreiten der Kettenwirkmaschine. Es ist jedoch schwierig, beide Parameter, also eine höhere Nenndrehzahl und eine größere Arbeitsbreite, miteinander zu kombinieren. Je größer die Arbeitsgeschwindigkeit oder Nenndrehzahl der Kettenwirkmaschine ist, desto stärkere Probleme ergeben sich mit Schwingungen. Diese Probleme werden umso größer, je größer die Arbeitsbreite der Kettenwirkmaschine ist. Wenn die Walze oder die Walzen des Warenabzugs schwingen, hat dies einen negativen Einfluss auf die Qualität der Wirkware.

Der Erfindung liegt die Aufgabe zugrunde, eine Kettenwirkmaschine mit hoher Produktivität bereitzustellen.

Diese Aufgabe wird bei einer Kettenwirkmaschine der eingangs genannten Art mit den Merkmalen des Anspruchs 1 gelöst.

Wenn man die Arbeitsbreite der Kettenwirkmaschine vergrößert, dann vergrößert sich in gleicher Weise die axiale Länge der Walzen. Die Walzen werden damit schlanker und sind damit empfindlicher gegenüber Schwingungen. Dies lässt sich nur teilweise dadurch kompensieren, dass man die Masse der Walzen erhöht, z.B. indem man sie mit schwerem Material befüllt, oder die Steifigkeit erhöht, z.B. durch Erhöhen der Wandstärke oder des Durchmessers. Diese Maßnahmen haben darüber hinaus den Nachteil, dass sie eine Wartung der Kettenwirkmaschine erschweren, weil dabei jedenfalls gelegentlich der Warenabzug entfernt werden muss.

Durch die Verwendung einer Schwingungstilgeranordnung werden nun Schwingungen, die bei der Nenndrehzahl der Kettenwirkmaschine auftreten, zumindest teilweise absorbiert. Es entstehen zwar zwei neue Resonanzfrequenzen. Diese haben jedoch dann einen geringeren Schwingweg.

Die Schwingungstilgeranordnung weist mindestens einen passiven Schwingungstilger auf. Damit ist die Zufuhr einer Hilfsenergie von außen nicht erforderlich. Die Schwingungstilgeranordnung wird durch eine Schwingung von außen angeregt und entzieht dadurch der Schwingung Energie.

Alternativ oder zusätzlich kann vorgesehen sein, dass die Schwingungstilgeranordnung mindestens einen aktiven, hybriden und/oder adaptiven Schwingungstilger aufweist. Ein aktiver Schwingungstilger kann beispielsweise Piezoelemente, wie Piezoplatten, Piezofolien, Piezostapelaktoren oder dergleichen enthalten. Ein adaptiver Schwingungstilger kann ein passiver Schwingungstilger mit einer im Betrieb veränderbaren Frequenz sein. Ein hybrider Schwingungstilger beispielsweise mit zwei Piezofolien ausgebildet sein, von denen eine als Generator und eine als Aktor wirkt, Dadurch wird Schwinungsenergie in Wärme umgewandelt. Derartige Schwingungstilger können auch zusätzlich zu einem rein passiven Schwingungstilger eingesetzt werden.

Der Schwingungstilger weist eine über eine Federanordnung mit dem Walzenrohr verbundene Massenanordnung auf, wobei die Verbindung insbesondere über einen Adapter erfolgt. Der Adapter kann beispielsweise in das Walzenrohr eingepresst, eingeklebt, eingeschweißt oder verschraubt sein. Durch die direkte Verbindung oder die Verbindung über den Adapter wird die Schwingung des Walzenrohres unmittelbar in den Schwingungstilger eingeleitet. Die Schwingung wird dann über die Federanordnung auf die Massenanordnung übertragen, die ihrerseits schwingt und zwar etwa in Gegenphase zur anregenden Schwingung und dadurch der Schwingung des Walzenrohres Energie entzieht.

Die Federanordnung weist eine Stange auf, die sich in axialer Richtung der Walze erstreckt. Die Stange bildet dann eine Art Feder oder hat zumindest die Funktion einer Feder mit einer definierten Nachgiebigkeit.

Die Walze ist als Walzenrohr mit einem Hohlraum ausgebildet und die Schwingungstilgeranordnung ist im Hohlraum angeordnet. Die Schwingungstilgeranordnung benötigt also keinen zusätzlichen Bauraum. Die Schwingungstilgeranordnung kann jedoch dort angeordnet werden, wo ohne weitere Maßnahmen die größten Schwingungen auftreten würden.

Vorzugsweise ist die Schwingungstilgeranordnung symmetrisch in Bezug zu einer axialen Mitte der Walze angeordnet. Damit lässt sich die Schwingungstilgung auf den Bereich der axialen Mitte konzentrieren. Der Begriff "symmetrisch" ist hier nicht im mathematisch engen Sinne zu verstehen. Abweichungen von einer exakten Symmetrie sind bis zu 20% zulässig.

Dies ist in einer bevorzugten Weise auf einfache Weise dadurch möglich, dass die Schwingungstilgeranordnung zumindest in einem mittleren axialen Drittel mit der Walze verbunden ist. Die Schwingungstilgeranordnung ist dann etwa in der axialen Mitte der Walze mit der Walze verbunden, also dort, wo die größte Schwingungsamplitude auftritt. Dementsprechend ist die Tilgerwirkung oder Dämpferwirkung am größten.

Vorzugsweise weichen zwei beliebige Längsschnitte der Massenanordnung durch die Achse der Walze um nicht mehr als 20% der Schnittflächengröße voneinander ab. Die Massenanordnung weist also eine in Umfangsrichtung um die Achse der Walze weitgehend homogene Massenverteilung auf. Im Idealfall ist die Massenverteilung in Umfangsrichtung homogen, was sich allerdings vielfach nicht mit vertretbarem Aufwand realisieren lässt. Die weitgehend homogene Massenverteilung ist ein Beitrag dazu, Schwingungen in alle Richtungen quer zur Achse der Walze gleichartig zu dämpfen. Auch bei einer Rotation der Walze werden die Schwingungen zuverlässig gedämpft.

Vorzugsweise weist die Stange einen zylindrischen oder quadratischen Querschnitt oder einen mehreckigen Querschnitt mit mindestens 8 Ecken auf. Damit ist ihr Verformungsverhalten in alle radialen Richtungen (bezogen auf eine Achse des Walzenrohrs) praktisch gleich. Dies ist ein weiterer Beitrag dazu, der Tilgeranordnung in alle radialen Richtungen die gleiche Dämpfungs- oder Tilgungswirkung mitzugeben.

Vorzugsweise weist die Massenanordnung mindestens zwei Massen auf, die beidseits des Adapters an der Stange befestigt sind. Wenn Schwingungen in das Walzenrohr eingetragen werden, dann werden diese Schwingungen über die Stange an die beiden Massen übertragen, die dann im Idealfall im Gegentakt zur Schwingung des Walzenrohres schwingen und damit die Schwingungen bei Nenndrehzahl tilgen.

Vorzugsweise weisen die Massen eine an die Innenkontur des Hohlraums angepasste Außenkontur auf. Dadurch wird der Hohlraum innerhalb des Walzenrohrs bestmöglich ausgenutzt. Insbesondere können die Massen eine zylindrische Außenkontur aufweisen. Üblicherweise weist ein Walzenrohr einen zylindrischen Innenraum auf. Die Ausbildung mit einer zylindrischen Außenkontur hat darüber hinaus die Vorteile, dass man die Massenverteilung in Umfangsrichtung weitgehend homogen gestalten kann, ohne einen großen Aufwand betreiben zu müssen. Kleine Abweichung von der Zylinderform, beispielsweise eine mehreckige Form oder eine andere Konturierung sind akzeptabel.

Vorzugsweise sind die Massen an unterschiedlichen Positionen auf der Stange festlegbar. Damit können die Massen so positioniert werden, dass sie auf die Eigenfrequenz der jeweiligen Walze oder des Gesamtsystems aus mehreren Walzen abgestimmt sind. Man kann damit auch eine Feinabstimmung vornehmen. Wenn die Massen positioniert worden sind, können sie an den Stangen so befestigt werden, dass ihre Position nicht mehr oder nicht mehr ohne weiteres verändert werden kann.

Vorzugsweise ist die Stange als Gewindestange ausgebildet. Eine Gewindestange ist ein handelsübliches Bauelement, das wenig zusätzliche Kosten verursacht. Eine Gewindestange weist ein Außengewinde auf. Dieses Außengewinde kann verwendet werden, um die Massen an bestimmten Positionen festzulegen. Zum Festlegen kann man beispielsweise Muttern verwenden, die gegen die Massen geschraubt werden. Alternativ dazu können die Massen ein Innengewinde aufweisen. Man kann durch ein Verdrehen der Massen auf der Gewindestange die Position der Massen festlegen. Gegebenenfalls kann die Position der Masse auf der Gewindestange dann durch eine Kontermutter gesichert werden.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer Kettenwirkmaschine,
- Fig. 2: eine Schwingungstilgeranordnung und
- Fig. 3: die Schwingungstilgeranordnung eingebaut in eine Walze.

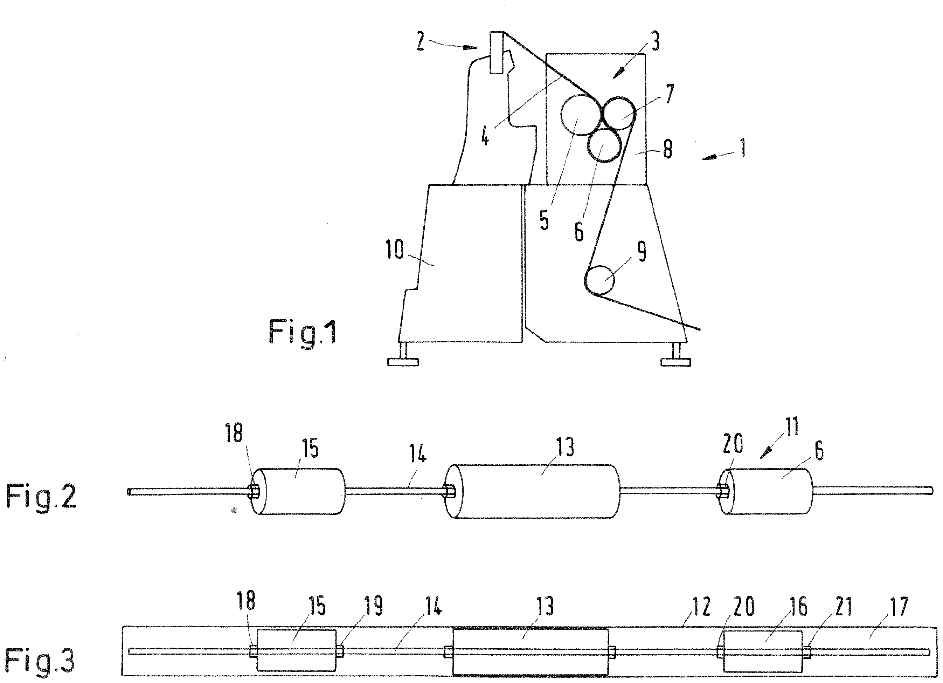

Fig. 1 zeigt stark schematisiert eine Kettenwirkmaschine 1 mit einem Wirkbereich 2 und einem Warenabzug 3. Im Wirkbereich 2 wird aus zulaufenden Fäden einer Kette eine Wirkware 4 gebildet, die vom Warenabzug 3 aus dem Wirkbereich 2 abgezogen wird. Die Spannung, mit der die Wirkware 4 aus dem Wirkbereich 2 abgezogen wird, ist ein Parameter, mit dem Eigenschaften der Wirkware 4 beeinflusst werden können.

Der Warenabzug 3 weist mehrere Walzen 5, 6, 7 auf, über die die Wirkware 4 geführt wird. Diese Walzen 5-7 sind in einem Rahmen 8 der Kettenwirkmaschine drehbar gelagert.

Die Wirkware 4 kann über eine schematisch dargestellte Umlenkwalze 9 noch einer nicht näher dargestellten Aufrollung zugeführt werden.

Die Walzen 5-7 des Warenabzugs 3 drehen sich relativ langsam. Im Wirkbereich 2 arbeiten jedoch Wirkwerkzeuge zusammen, die an Barren befestigt sind. Diese Barren müssen bei jedem Maschenbildungsvorgang mindestens einmal in entgegengesetzte Richtungen bewegt werden. Hierzu werden sie üblicherweise von einer Hauptwelle angetrieben, die in einem Maschinenbett 10 mit einer wesentlich größeren Drehzahl als die Walzen 5-7 des Warenabzugs 3 rotiert. Hierbei entstehen in erheblichem Maße Schwingungen, die vom Maschinenbett 10 auf den Rahmen 8 und damit auf die Walzen 5-7 des Warenabzugs 3 übertragen werden. Diese Schwingungen wiederum regen die Walzen 5-7 zu Schwingungen an. Derartige Schwingungen können sich negativ auf die Qualität der Wirkware 4 auswirken. Starke Schwingungen können darüber hinaus zur Beschädigung der Walzen 5-7 führen.

Um Schwingungen im Warenabzug 3 entgegenzuwirken und dabei zu ermöglichen, dass die Kettenwirkmaschine 1 eine große Arbeitsbreite aufweist und gleichzeitig mit einer hohen Nenndrehzahl betrieben werden kann, ist eine in Fig. 2 näher dargestellte Schwingungstilgeranordnung 11 vorgesehen. Die Schwingungstilgeranordnung ist in Fig. 3 eingebaut in ein Walzenrohr 12 dargestellt. Das Walzenrohr 12 kann zu einer der Walzen 5-7 und/oder zu der Rolle 9 gehören. Es ist auch möglich, in zwei oder sogar drei der Walzen 5-7 des Warenabzugs 3 eine entsprechende Schwingungstilgeranordnung 11 vorzusehen.

Die Schwingungstilgeranordnung 11 ist im vorliegenden Ausführungsbeispiel als passiver Schwingungstilger ausgebildet. Sie weist einen Adapter 13 auf, der mit dem Walzenrohr 12 verbunden ist. Der Adapter 13 kann in das Walzenrohr 12 eingepresst, eingeschweißt, eingeklebt oder hier verschraubt sein. Der Adapter 13 ist mit einer Stange 14 verbunden. Im vorliegenden Ausführungsbeispiel ist die Stange 14 durch den Adapter 13 hindurchgeführt. Es ist auch möglich, zwei Stangen 14 zu verwenden, die auf beiden Seiten des Adapters 13 aus dem Adapter 13 herausragen. Der Adapter 13 ist über die Stange 14 mit einer Massenanordnung verbunden, die im vorliegenden Fall zwei Massen 15, 16, die auch als Massenelement bezeichnet werden können, aufweisen. Die Massen 15, 16 sind symmetrisch zum Adapter 13 angeordnet, d.h. sie haben die gleiche Entfernung zum Adapter 13 und die gleiche physikalische Masse. Abweichungen von einer mathematisch exakten Symmetrie sind allerdings möglich. So können die Massen 15, 16 beispielsweise Größen haben, die sich um bis zu 20 % unterscheiden. Auch die Entfernungen zum Anbindungspunkt am Walzenrohr 12 können sich um bis zu 20 % unterscheiden.

Die Schwingungstilgeranordnung 11 ist in einem mittleren axialen Drittel des Walzenrohres 12, also in einem Mittelbereich des Walzenrohres 12 mit der Walze verbunden. Im Idealfall erfolgt eine Verbindung in der axialen Mitte, was sich aber nicht immer realisieren lässt.

Es ist auch möglich, die Massen 15, 16 oder auch nur eine einzelne Masse über eine Federanordnung unmittelbar mit dem Walzenrohr 12 zu verbinden. In diesem Fall kann die Federanordnung beispielsweise mehrere Federn aufweisen, die mit dem Walzenrohr 12 verbunden sind und an denen die Masse oder die Massen aufgehängt sind. Die Federn können beispielsweise durch Elastomere gebildet sein.

Anstelle eines passiven Schwingungstilger oder zusätzlich zu einem passiven Schwingungstilger kann man auch einen aktiven Schwingungstilger verwenden, der beispielsweise mit Piezo-Elementen arbeitet. Als Piezo-Elemente kann man beispielsweise Piezo-Platten, Piezo-Folien, Piezo-Stapelaktoren oder dergleichen verwenden. Man kann auch passive Schwingungstilger mit veränderlicher Federsteifigkeit im Betrieb verwenden. Ein derartiger Schwingungstilger wird auch als adaptiver Schwingungstilger bezeichnet. Es ist auch möglich, einen hybriden Schwingungstilger zu verwenden, der beispielsweise mit 2 Piezo-Folien arbeitet. Eine Folie wirkt dabei als Generator und eine andere Folie wirkt als Aktor. Dadurch wird Schwinungsenergie in Wärme umgewandelt.

Die Massen 15, 16 sind zylinderförmig, quadratisch oder mit einem polygonförmigen Querschnitt, der vorzugsweise mindestens 8 Ecken aufweist, ausgebildet. Dies ist eine einfache Möglichkeit, um die Massenverteilung der Massen 15, 16 in Umfangsrichtung weitgehend homogen zu gestalten. Die Homogenität lässt sich beispielsweise dadurch definieren, dass zwei beliebige Längschnitte der Massen 15, 16 durch die Achse der Walze 5-7 um nicht mehr als 20% der Schnittflächengröße voneinander abweichen.

Auch die Stange 14 ist zylinderförmig oder mit einem polygonförmigen Querschnitt, der vorzugsweise mindestens 10 Ecken aufweist, ausgebildet, so dass die Schwingungstilgeranordnung 11 in allen radialen Richtungen praktisch das gleiche Schwingungsverhalten und damit praktisch das gleiche Tilgungsverhalten aufweist. Dies ist von Vorteil, weil sich die Walzen 5-7 in Betrieb drehen.

Wie man anhand von Fig. 3 erkennen kann, ist die Schwingungstilgeranordnung 11 symmetrisch in Bezug zu einer axialen Mitte des Walzenrohres 12 angeordnet und in der axialen Mitte der Walze mit dem Walzenrohr 12 verbunden.

Das Walzenrohr 12 weist einen Hohlraum 17 auf, der einen zylindrischen Innenquerschnitt aufweist. Dementsprechend sind die Massen 15, 16 mit ihrer zylindrischen, quadratischen oder mehreckigen Außenkontur bestmöglich an die Innenkontur des Hohlraums 17 angepasst und können den Hohlraum 17 als Bauraum bestmöglich ausnutzen.

Die Stange 14 ist als Gewindestange ausgebildet, d.h. sie weist ein Außengewinde auf. Im vorliegenden Ausführungsbeispiel sind die Massen 15, 16 an ihren beiden Stirnseiten mit Gewindemuttern 18, 19; 20, 21 versehen. Es ist jedoch auch möglich, ein Innengewinde unmittelbar in den Massen 15, 16 vorzusehen.

Die Stange 14 hat die Funktion einer Feder. Sie hat gleichzeitig die Funktion eines Dämpfers.

Dargestellt ist ein Walzenrohr 12 mit einer einzigen Schwingungstilgeranordnung 11. Es ist auch möglich, mehrere Schwingungstilgeranordnungen in einer Walze 5-7 zu verwenden.

## Patentansprüche

1. Kettenwirkmaschine (1) mit einem Wirkbereich (2) und einem Warenabzug (3), der mindestens eine Walze (5-7) aufweist, **dadurch gekennzeichnet, dass** die Walze (5-7) als Walzenrohr (12) mit einem Hohlraum (17) ausgebildet ist und eine Schwingungstilgeranordnung (11) mit einem passiven Schwingungstilger und/oder einen aktiven, hybriden und/oder adaptiven Schwingungstilger aufweist, die (11) im Hohlraum (17) angeordnet ist, wobei der Schwingungstilger eine über eine Federanordnung mit dem Walzenrohr (12) verbundene Massenanordnung aufweist, wobei die Federanordnung eine Stange (14) aufweist, die sich in axialer Richtung der Walze (5-7) erstreckt und die Funktion einer Feder hat.

2. Kettenwirkmaschine nach Anspruch 1, **dadurch gekennzeichnet, dass** die Schwingungstilgeranordnung (11) symmetrisch in Bezug zu einer axialen Mitte der Walze (5-7) angeordnet ist.

3. Kettenwirkmaschine nach Anspruch 1 oder 2, **dadurch gekennzeichnet, dass** die Schwingungstilgeranordnung (11) zumindest in einem mittleren axialen Drittel der Walze (5-7) mit der Walze (5-7) verbunden ist.

4. Kettenwirkmaschine nach einem der Ansprüche 1 bis 3, **dadurch gekennzeichnet, dass** eine Verbindung des Schwingungstilgers mit dem Walzenrohr (12) über einen Adapter (13) erfolgt.

5. Kettenwirkmaschine nach einem der Ansprüche 1 bis 4, **dadurch gekennzeichnet, dass** zwei beliebige Längsschnitte der Massenanordnung durch die Achse der Walze (5-7) um nicht mehr als 20% der Schnittflächengröße voneinander abweichen.

6. Kettenwirkmaschine nach einem der Ansprüche 1 bis 5, **dadurch gekennzeichnet, dass** die Stange (14) einen zylindrischen oder quadratischen Querschnitt oder einen mehreckigen Querschnitt mit mindestens 8 Ecken aufweist.

7. Kettenwirkmaschine nach einem der Ansprüche 1 bis 6, **dadurch gekennzeichnet, dass** die Massenanordnung mindestens zwei Massen (15, 16) aufweist, die beidseits des Adapters (13) an der Stange (14) befestigt sind.

8. Kettenwirkmaschine nach Anspruch 7, **dadurch gekennzeichnet, dass** die Massen (15, 16) eine an die Innenkontur des Hohlraums (17) angepasste Außenkontur aufweisen.

9. Kettenwirkmaschine nach Anspruch 7 oder 8, **dadurch gekennzeichnet, dass** die Masse (15, 16) eine zylindrische Außenkontur aufweisen.

10. Kettenwirkmaschine nach einem der Ansprüche 7 bis 9, **dadurch gekennzeichnet, dass** die Massen (15, 16) an unterschiedlichen Positionen auf der Stange (14) festlegbar sind.

11. Kettenwirkmaschine nach Anspruch 10, **dadurch gekennzeichnet, dass** die Stange (14) als Gewindestange ausgebildet ist.

## Claims

1. Warp knitting loom (1) having a knitting area (2) and a fabric take-up (3), which comprises at least one roller (5-7), **characterized in that** the roller (5-7) is designed as a roller tube (12) having a cavity (17) and comprises a vibration absorber arrangement (11) having a passive vibration absorber and/or an active, hybrid and/or adaptive vibration absorber, which (11) is arranged in the cavity (17), wherein the vibration absorber comprises a mass arrangement connected via a spring arrangement to the roller tube (12), wherein the spring arrangement comprises a bar (14), which extends in axial direction of the roller (5-7) and has a function of a spring.

2. Warp knitting loom according to claim 1, **characterized in that** the vibration absorber arrangement (11) is arranged symmetrical in relation to an axial center of the roller (5-7).

3. Warp knitting loom according to claim 1 or 2, **characterized in that** the vibration absorber arrangement (11) is connected to the roller (5-7) in a middle axial third of the roller (5-7).

4. Warp knitting loom according to one of claims 1 to 3, **characterized in that** a connection of the vibration absorber to the roller tube (12) is formed by an adapter (13).

5. Warp knitting loom according to one of claims 1 to 4, **characterized in that** any two longitudinal cross-sections of the mass arrangement through the axis of the roller do not deviate from each other by more than 20% of the size of the cross-section surface.

6. Warp knitting loom according to one of claims 1 to 5, **characterized in that** the bar (14) comprises a cylindrical or square cross-section or a polygonal cross section having at least 8 corners.

7. Warp knitting loom according to one of claims 1 to 6, **characterized in that** the mass arrangement comprises at least two masses (15, 16), which are fixed to the bar (14) on both sides of the adapter (13).

8. Warp knitting loom according to claim 7, **characterized in that** the masses (15, 16) comprise an outer contour adapted to the inner contour of the cavity (17).

9. Warp knitting loom according to claim 7 or 8, **characterized in that** the masses (15, 16) comprise a cylindrical outer contour.

10. Warp knitting loom according to one of claims 7 to 9, **characterized in that** the masses (15, 16) are fixable at different positions on the bar (14).

11. Warp knitting loom according to claim 10, **characterized in that** the bar (14) is designed as threaded rod.

## Revendications

1. Métier à tricoter chaîne (1) avec une zone de tricotage (2) et un dispositif attracteur (3), qui comporte au moins un rouleau (5-7), **caractérisé en ce que** le rouleau (5-7) est constitué sous la forme d'un tube cylindrique (12) avec un espace creux (17) et comporte un système amortisseur d'oscillations (11) avec un amortisseur d'oscillation passif et/ou un amortisseur d'oscillations actif, hybride et/ou adaptatif, qui est disposé dans l'espace creux (17), sachant que l'amortisseur d'oscillations comporte un système de masses relié par un système de ressort au tube cylindrique (12), sachant que le système à ressort comporte une tige (14), qui s'étend en direction axiale du rouleau (5-7) et à la fonction d'un ressort.

2. Métier à tricoter chaîne selon la revendication 1, **caractérisé en ce que** le système d'amortisseur d'oscillations (11) est disposé de façon symétrique par rapport à un centre axial du rouleau (5-7).

3. Métier à tricoter chaîne selon la revendication 1 ou 2, **caractérisé en ce que** le système d'amortisseur d'oscillations (11) est relié au rouleau (5-7) au moins dans un tiers axial central du rouleau (5-7).

4. Métier à tricoter chaîne selon l'une quelconque des revendications 1 à 3, **caractérisé en ce qu'**une liaison de l'amortisseur d'oscillations avec le tube de cylindre (12) a lieu par le biais d'un adaptateur (13).

5. Métier à tricoter chaîne selon l'une quelconque des revendications 1 à 4, **caractérisé en ce que** deux sections longitudinales quelconques du système de masses ne s'écartent de pas plus de 20 % l'une de l'autre de la valeur de surface de coupe à travers l'axe du rouleau (5, 7).

6. Métier à tricoter chaîne selon l'une quelconque des revendications 1 à 5, **caractérisé en ce que** la tige (14) comporte une section cylindrique ou quadratique ou une section polygonale avec au moins 8 angles.

7. Métier à tricoter chaîne selon l'une quelconque des revendications 1 à 6, **caractérisé en ce que** le système de masses comporte au moins deux masses (15, 16), qui sont fixées des deux côtés de l'adaptateur (13) sur la tige (14).

8. Métier à tricoter chaîne selon la revendication 7, **caractérisé en ce que** les masses (15, 16) comportent un profil extérieur adapté au profil intérieur de l'espace creux (17).

9. Métier à tricoter chaîne selon la revendication 7 ou 8, **caractérisé en ce que** les masses (15, 16) comportent un profil extérieur cylindrique.

10. Métier à tricoter chaîne selon l'une quelconque des revendications 7 à 9, **caractérisé en ce que** les masses (15, 16) peuvent être positionnées à des positions différentes sur la tige (14).

11. Métier à tricoter chaîne selon la revendication 10, **caractérisé en ce que** la tige (14) est constituée sous la forme d'une tige filetée.
